# EUROPÄISCHE PATENTSCHRIFT

(11) **EP 3 024 630 B1**
(45) Veröffentlichungstag und Bekanntmachung des Hinweises auf die Patenterteilung: **28.06.2017**
(21) Anmeldenummer: 15711206.1
(22) Anmeldetag: 23.03.2015
(51) Int. Cl.: B29C 47/84, B29C 47/66, B29C 47/60, B29C 47/92, B29C 47/08, B29C 47/40, B29C 47/80, H05B 6/10, B29C 47/00

(54) **SCHNECKENMASCHINE UND VERFAHREN ZUR INDUKTIVEN SCHNECKENHEIZUNG IN EINER HEIZZONE**
SCREW MACHINE AND METHOD FOR INDUCTIVE SCREW HEATING IN A HEATING ZONE
MACHINE À VIS ET PROCÉDÉ DE CHAUFFAGE DE VIS PAR INDUCTION DANS UNE ZONE DE CHAUFFAGE

(30) Priorität: 07.04.2014 DE 102014206638
(43) Veröffentlichungstag der Anmeldung: 01.06.2016
(73) Patentinhaber: Coperion GmbH, 70469 Stuttgart (DE)
(72) Erfinder: WELB, Sören, 74360 Ilsfeld (DE)
(74) Vertreter: Rau, Schneck & Hübner Patentanwälte Rechtsanwälte PartGmbB
(86) Internationale Anmeldenummer: PCT/EP2015/056039
(87) Internationale Veröffentlichungsnummer: WO 2015/154973

(56) Entgegenhaltungen:
- EP-A2- 1 013 402
- CN-U- 202 846 846
- DE-A1- 3 314 824
- DE-B- 1 105 143
- FR-A1- 2 600 759
- US-A1- 2009 057 300

## Beschreibung

Die Erfindung betrifft eine Schneckenmaschine gemäß dem Oberbegriff des Anspruchs 1 und ein Verfahren zur Aufbereitung von Kunststoffmaterial nach Anspruch 10. Bekannte Schneckenmaschinen weisen zur Aufbereitung von Kunststoffmaterial eine Einzugszone und eine nachgeordnete Aufschmelz- bzw. Plastifizierzone auf. In der Einzugszone wird das Kunststoffmaterial, wie beispielsweise Polymerpulver oder -granulat, der Schneckenmaschine zugeführt und in Richtung der Plastifizierzone transportiert, wo mittels Knetelementen das Kunststoffmaterial durch mechanischen Energieeintrag aufgeschmolzen wird. Bei diesem Aufschmelzen werden üblicherweise über 60 % des gesamten mechanischen Energieeintrages über den ersten Knetblock eingebracht. Dies hat zur Folge, dass in der Plastifizierzone der Schneckenmaschine sehr hohe mechanische Kräfte wirken, wodurch es zu Schwingungen der Behandlungselementwellen und zu einem mechanischen Verschleiß bei den Behandlungselementen und dem Gehäuse kommt.

Um den erforderlichen mechanischen Energieeintrag zu vermindern, werden Heizvorrichtungen eingesetzt. Aus der DE 44 04 031 C1 ist eine Schneckenmaschine bekannt, die elektrisch beheizbare Gehäuseabschnitte aufweist. Die Gehäuseabschnitte weisen einen wärmeleitfähigen Guss-Einsatz auf, der mit mehreren elektrischen Widerstandsheizelementen ausgerüstet ist. Die Widerstandsheizelemente sind in verschiedenen Ebenen in den wärmeleitfähigen Guss-Einsatz eingegossen.

Aus der DE 35 23 929 A1 (entspricht GB 2 163 630 A) ist bekannt, die Gehäuseabschnitte eines Extruders mittels einer induktiven Heizvorrichtung zu beheizen. Hierzu sind Spulen mittels eines jeweiligen Eisenkerns an Außenseiten des beheizbaren Gehäuseabschnitts angeordnet. Das zu erwärmende Kunststoffmaterial wird durch den Gehäuseabschnitt gefördert und erwärmt sich an diesem.

Die DE 1 105 143 A offenbart eine Schneckenpresse, bei der innerhalb eines Zylinders zwei gegenläufige Schnecken angeordnet sind. Der Zylinder ist von einer hitzebeständigen Spule umgeben, die zur induktiven Beheizung der Schneckenpresse dient. Der Zylinder ist aus einem unmagnetischen Metall, wie beispielsweise unmagnetischem Eisen hergestellt, wohingegen die Schnecke aus einem magnetischen Material besteht. Hierdurch lassen sich die Schnecken direkt induktiv beheizen.

Aus der EP 1 013 402 A2 ist ein Zweiwellen-Extruder bekannt, dessen Knetscheiben derart ausgebildet sind, dass bei minimalem Energieeintrag und großer Verweilzeit das gesamte zu mischende Material vollständig distributiv gemischt und gleichzeitig die Gehäusewand des Extruders vollständig abgestreift wird.

Aus der CN 202 846 846 U ist eine Spritzgießmaschine mit einem magnetischen Heizsystem bekannt. Die Spritzgießmaschine umfasst ein dreischichtiges Gehäuse mit einer keramischen Schicht, einer Edelstahlschicht und einer keramischen Faser-Isolationsschicht. Das Gehäuse ist von einer Spule umgeben, die zur Erzeugung eines Magnetfelds von einer elektronischen Steuereinheit angesteuert wird. Durch das Magnetfeld wird eine in dem Gehäuse befindliche metallische Schnecke geheizt.

Aus der US 2009/0057300 A1 ist ein Doppelschneckenextruder mit einem induktiven Heizsystem bekannt, die FR 2 600 759 A1 offenbart eine ähnliche Schneckenmaschine mit induktiver Heizung für feste und pastöse Massen.

Der Erfindung liegt die Aufgabe zugrunde, eine Schneckenmaschine zu schaffen, die auf einfache und effiziente Weise eine Erwärmung bzw. Aufheizung von aufzubereitendem Kunststoffmaterial mit einem hohen Energieeintrag ermöglicht. Die Schneckenmaschine soll dabei eine Erwärmung bzw. Aufheizung des Kunststoffmaterials bis zu dessen Aufschmelzung ermöglichen.

Diese Aufgabe wird durch eine Schneckenmaschine mit den Merkmalen des Anspruchs 1 gelöst. Das Kunststoffmaterial kann wesentlich einfacher und effektiver erwärmt werden, wenn die induktive Heizvorrichtung mit dem mindestens einen Behandlungselement bzw. mit den Behandlungselementen in der Heizzone zusammenwirkt und nicht mit dem mindestens einen Gehäuseabschnitt bzw. mit den Gehäuseabschnitten, da das mindestens eine Behandlungselement in intensivem Kontakt mit dem Kunststoffmaterial steht und großflächig von dem Kunststoffmaterial umgeben ist. Um einen effizienten Energieeintrag in das Kunststoffmaterial zu gewährleisten, ist der mindestens eine Gehäuseabschnitt in der Heizzone zumindest teilweise aus einem elektromagnetisch transparenten Material ausgebildet. Das elektromagnetisch transparente Material wirkt im Wesentlichen nicht mit der induktiven Heizvorrichtung zusammen. Das elektromagnetisch transparente Material ist erfindungsgemäß elektrisch nicht-leitfähig und nicht-magnetisch. Insbesondere ist das elektromagnetisch transparente Material nicht-ferromagnetisch. Vorzugsweise sind mehrere Gehäuseabschnitte, insbesondere alle Gehäuseabschnitte in der Heizzone zumindest teilweise aus dem elektromagnetisch transparenten Material ausgebildet. Demgegenüber ist das mindestens eine Behandlungselement in der Heizzone zumindest teilweise aus einem elektrisch leitfähigen Material ausgebildet, so dass durch die induktive Heizvorrichtung in dem mindestens einen Behandlungselement Wirbelströme induziert werden, die wiederum ohmsche Wirbelstromverluste verursachen und das mindestens eine Behandlungselement erwärmen. Über das mindestens eine erwärmte Behandlungselement wird die von der induktiven Heizvorrichtung bereitgestellte Energie einfach und effizient bzw. möglichst verlustfrei in das Kunststoffmaterial eingebracht. Das elektrisch leitfähige Material ist insbesondere eisenhaltig und ferromagnetisch. Hierdurch lässt sich das mindestens eine Behandlungselement durch ohmsche Wirbelstromverluste und Ummagnetisierungsverluste effizient erwärmen. Das elektrisch leitfähige Material bildet zumindest eine Heiz-Schicht des mindestens einen Behandlungselements, die eine mit dem Kunststoffmaterial in Kontakt stehende Oberfläche bildet. Vorzugsweise sind mehrere Behandlungselemente, insbesondere alle Behandlungselemente in der Heizzone aus dem elektrisch leitfähigen Material ausgebildet.

Das elektromagnetisch transparente Material des mindestens einen Gehäuseabschnitts ist beispielsweise ein nicht-metallisches Material, wie beispielsweise ein keramisches Material. Demgegenüber ist das elektrisch leitfähige Material des mindestens einen Behandlungselements beispielsweise ein metallisches Material, wie beispielsweise Stahl.

Durch die induktive Heizvorrichtung wird ein magnetisches Wechselfeld erzeugt. Das magnetische Wechselfeld wirkt mit dem mindestens einen Behandlungselement zusammen, jedoch im Wesentlichen nicht mit dem mindestens einen Gehäuseabschnitt. Durch das magnetische Wechselfeld werden in dem mindestens einen Behandlungselement Wirbelströme induziert, die Wirbelstromverluste verursachen und insbesondere zusammen mit Ummagnetisierungsverlusten das mindestens eine Behandlungselement erwärmen. Demgegenüber wirkt der mindestens eine Gehäuseabschnitt nicht mit der induktiven Heizvorrichtung zusammen, so dass das magnetische Wechselfeld im Wesentlichen keine Temperaturerhöhung des mindestens einen Gehäuseabschnitts verursacht. Dadurch, dass mittels der induktiven Heizvorrichtung die bereitgestellte Energie über das mindestens eine Behandlungselement in das Kunststoffmaterial eingebracht wird, ist eine einfache und äußerst effiziente Erwärmung des Kunststoffmaterials möglich. Da das mindestens eine Behandlungselement in intensivem Kontakt mit dem Kunststoffmaterial steht und inmitten des Kunststoffmaterials angeordnet ist bzw. das Kunststoffmaterial das mindestens eine Behandlungselement im Wesentlichen voll umfänglich umgibt, ist der Energieeintrag vergleichsweise verlustfrei, so dass das Kunststoffmaterial mittels der induktiven Heizvorrichtung bis zum zumindest teilweisen Aufschmelzen erwärmt werden kann. Hierdurch können die in der Schneckenmaschine wirkenden mechanischen Kräfte und der damit verbundene Verschleiß deutlich reduziert werden. Das mindestens eine Behandlungselement ist als Schneckenelement und/oder Knetelement ausgebildet. Das Knetelement kann eine einzelne Knetscheibe oder ein einteiliger Knetblock aus mehreren miteinander verbundenen Knetscheiben sein.

Die Schneckenmaschine gewährleistet eine effiziente Einbringung von Energie in das mindestens eine Behandlungselement. Die mindestens eine Spule ist mit ihrer Spulenachse bzw. Mittellängsachse im Wesentlichen in Richtung der Drehachse bzw. Drehachsen der mindestens einen Behandlungselementwelle ausgerichtet. Idealerweise verläuft eine Mittellängsachse der mindestens einen Spule parallel zu der Drehachse der mindestens einen Behandlungselementwelle. Die mindestens eine Behandlungselementwelle ist somit in einem Innenraum der Spule angeordnet. Die mindestens eine Spule ist somit nach Art einer Helmholtz-Spule angeordnet, wobei die mindestens eine Behandlungselementwelle einen Kern bildet. Die Feldlinien des magnetischen Wechselfeldes konzentrieren sich somit im Innenraum und in dem mindestens einen Behandlungselement, insbesondere in dessen Heiz-Schicht, so dass auf einfache Weise ein hoher Energieeintrag in das mindestens eine Behandlungselement bzw. dessen Heiz-Schicht möglich ist. Die Länge der Heizzone in der Förderrichtung ist durch die Länge der mindestens einen Spule und/oder die Anzahl der Spulen einstellbar. Die Länge der mindestens einen Spule ist insbesondere über die Anzahl deren Windungen bzw. Wicklungen einstellbar.

Dadurch, dass die Innenhülse aus dem elektromagnetisch transparentem Material hergestellt ist, erwärmt sich diese durch das magnetische Wechselfeld nicht. Hierdurch wird die von der induktiven Heizvorrichtung bereitgestellte Energie im Wesentlichen verlustfrei in das mindestens eine Behandlungselement eingebracht und dort in Wärme umgewandelt. Die mindestens eine Spule wird durch ohmsche Verluste erwärmt. Durch die Kühleinrichtung wird die in der mindestens einen Spule erzeugte Verlustwärme abgeführt. Die mindestens eine Spule kann somit mit einer hohen Leistung betrieben werden. Die mindestens eine Spule bildet selbst einen Kühlkanal aus, durch den ein Kühlmittel strömen kann, oder der Aufnahmeraum ist vollständig von der Innenhülse begrenzt, so dass dieser als Kühlkanal dient. Das Kühlmittel ist insbesondere Wasser. Zur Vermeidung von ohmschen Verlusten ist die Spule insbesondere aus Aluminium oder Kupfer hergestellt.

Die induktive Heizvorrichtung ist zur Erzeugung des magnetischen Wechselfelds insbesondere mit einer Frequenz f betreibbar, wobei für die Frequenz f gilt: 1 kHz ≤ f ≤ 50 kHz, insbesondere 5 kHz ≤ f ≤ 45 kHz, und insbesondere 10 kHz ≤ f ≤ 40 kHz. Wird die induktive Heizvorrichtung mit einer Frequenz f in diesem ersten Frequenzbereich betrieben, so wird in effizienter Weise ein hoher Energieeintrag in das mindestens eine Behandlungselement erzielt. Dadurch, dass der mindestens eine Gehäuseabschnitt in der Heizzone aus einem elektrisch nicht-leitfähigen Material ausgebildet ist, wird ein Energieeintrag in den mindestens einen Gehäuseabschnitt in diesem Frequenzbereich wirkungsvoll vermieden, sodass der effiziente Energieeintrag in das mindestens eine Behandlungselement ermöglicht wird. Zusätzlich oder alternativ kann die induktive Heizvorrichtung mit einer Frequenz f in einem zweiten Frequenzbereich betrieben werden, wobei für die Frequenz f gilt: 140 kHz ≤ f ≤ 360 kHz, insbesondere 150 kHz ≤ f ≤ 350 kHz, und insbesondere 160 kHz ≤ f ≤ 340 kHz. Durch den Betrieb der induktiven Heizvorrichtung in den zwei Frequenzbereichen wird eine Anregung bzw. Erwärmung des mindestens einen Behandlungselements in unterschiedlichen Eindringtiefen erzielt. Der Betrieb der induktiven Heizvorrichtung in dem ersten Frequenzbereich und dem zweiten Frequenzbereich erfolgt vorzugsweise abwechselnd. Hierdurch wird in effizienter Weise ein hoher Energieeintrag gewährleistet.

Vorzugsweise ist die Schneckenmaschine als Mehrwellen-Schneckenmaschine, insbesondere als Zweiwellen-Schneckenmaschine ausgebildet. Die Mehrwellen-Schneckenmaschine weist mehrere in dem Gehäuse ausgebildete Gehäusebohrungen und zugehörige Behandlungselementwellen auf, die in der zugehörigen Gehäusebohrung angeordnet und um eine zugehörige Drehachse drehantreibbar sind. Die Behandlungselementwellen sind insbesondere gleichsinnig drehantreibbar. Die auf den Wellen angeordneten Behandlungselemente sind vorzugsweise paarweise dicht kämmend ausgebildet.

Eine Schneckenmaschine nach Anspruch 2 gewährleistet eine einfache und effiziente Erwärmung des Kunststoffmaterials. Die Innenhülse begrenzt den Aufnahmeraum zumindest zu der mindestens einen Gehäusebohrung hin. Durch die Anordnung der mindestens einen Spule in dem Aufnahmeraum ist diese geschützt in dem mindestens einen Gehäuseabschnitt und nahe dem mindestens einem Behandlungselement angeordnet.

Eine Schneckenmaschine nach Anspruch 3 gewährleistet eine einfache und effiziente Erwärmung des Kunststoffmaterials. Vorzugsweise ist das Material der Innenhülse ein keramisches und/oder faserverstärktes Material, wie beispielsweise ein oxidkeramischer Faserverbundwerkstoff. Oxidkeramische Faserverbundwerkstoffe verbinden positive Eigenschaften von Metallen und Keramiken, wie beispielsweise elektromagnetische Transparenz, elektrische und thermische Isolationsfähigkeit, duktiles und nicht-sprödes Bruchverhalten, hohe Zug- und Biegefestigkeit, Oxidations- und Korrosionsbeständigkeit, Hochtemperaturstabilität bis über 1300° C und Thermowechselbeständigkeit. Da das magnetische Wechselfeld der mindestens einen Spule außerhalb der mindestens einen Spule nur zu einem geringen Energieeintrag in elektrisch leitfähige Bauteile führt, kann der Außenmantel aus einem elektrisch leitfähigen Material hergestellt sein. Alternativ kann auch der Außenmantel aus einem elektromagnetisch transparenten Material hergestellt sein. Insbesondere kann auch der Außenmantel aus einem keramischen und/oder faserverstärkten Material bestehen.

Eine Schneckenmaschine nach Anspruch 4 gewährleistet eine einfache und effiziente Erwärmung des Kunststoffmaterials. Dadurch, dass das mindestens eine Behandlungselement eine Isolations-Schicht aufweist, wird verhindert, dass das mindestens eine erwärmte Behandlungselement seine Wärme in Richtung der Welle verliert und diese Verlustwärme somit nicht zur Erwärmung des Kunststoffmaterials zur Verfügung steht. Die Isolations-Schicht ist beispielsweise aus einem keramischen Material.

Eine Schneckenmaschine nach Anspruch 5 gewährleistet ein verlustarmes Erwärmen des Kunststoffmaterials. Durch das Verbundmaterial weist das mindestens eine Behandlungselement verschiedene Eigenschaften auf. Das metallische Material der äußeren Heiz-Schicht gewährleistet eine Erwärmung der Heiz-Schicht aufgrund des magnetischen Wechselfeldes, so dass über die Heiz-Schicht unmittelbar das Kunststoffmaterial erwärmt werden kann. Die zwischen der äußeren Heiz-Schicht und der inneren Drehmomentübertragungs-Schicht liegende Isolations-Schicht minimiert die Verlustwärme, da die Wärme der Heiz-Schicht nicht in Richtung der inneren Drehmomentübertragungs-Schicht und der Welle, auf der das mindestens eine Behandlungselement angeordnet ist, verloren geht. Die innere Drehmomentübertragungs-Schicht weist eine hohe mechanische Belastbarkeit auf, so dass ein Drehmoment der Welle sicher auf das mindestens eine Behandlungselement übertragbar ist. Insbesondere wird die innere Drehmomentübertragungs-Schicht aufgrund der Isolations-Schicht nicht infolge von Verlustwärme geschwächt. Das Material der Isolations-Schicht ist insbesondere ein keramisches Material. Das mindestens eine Behandlungselement kann beispielsweise aus Keramik- und Metallpulver hergestellt werden, die in einer entsprechenden Form bei ca. 1400° C gesintert und zu einem Verbundmaterial bzw. Verbundkörper verbacken werden. Die Herstellung von Metall-Keramik-Verbundkörpern ist bekannt.

Eine Schneckenmaschine nach Anspruch 6 gewährleistet eine einfache und effiziente Erwärmung des Kunststoffmaterials. Im Querschnitt betrachtet, also senkrecht zu der jeweiligen Drehachse, sind die Schichten geschlossen, insbesondere ringförmig ausgebildet und umgeben die Drehachse der Behandlungselementwelle. Hierdurch isoliert die Isolations-Schicht die Heiz-Schicht vollumfänglich von der Welle. Darüber hinaus weist die Heiz-Schicht eine maximale Oberflächengröße auf, so dass ein guter Wärmeübergang von der Heiz-Schicht auf das Kunststoffmaterial gewährleistet ist.

Eine Schneckenmaschine nach Anspruch 7 gewährleistet einen hohen Energieeintrag.

Eine Schneckenmaschine nach Anspruch 8 gewährleistet in einfacher Weise die Bereitstellung eines magnetischen Wechselfeldes durch die induktive Heizvorrichtung. Die Energieversorgungseinrichtung weist insbesondere einen Frequenzumrichter auf, mit dem eine Frequenz f und/oder eine Amplitude einer Wechselspannung und/oder eines Wechselstroms einstellbar ist. Durch die Frequenz f ist beispielsweise die Eindringtiefe des elektromagnetischen Wechselfeldes in das mindestens eine Behandlungselement einstellbar. Vorzugsweise dringt das elektromagnetische Wechselfeld im Wesentlichen ausschließlich bzw. überwiegend in die Heiz-Schicht ein. Die induktive Heizvorrichtung bzw. die Energieversorgungseinrichtung wird insbesondere mit einer Frequenz f betrieben, wobei für die Frequenz f gilt:
1 kHz ≤ f ≤ 50 kHz, insbesondere 5 kHz ≤ f ≤ 45 kHz, und insbesondere 10 kHz ≤ f ≤ 40 kHz
   und/oder
140 kHz ≤ f ≤ 360 kHz, insbesondere 150 kHz ≤ f ≤ 350 kHz, und insbesondere 160 kHz ≤ f ≤ 340 kHz.

Eine Schneckenmaschine nach Anspruch 9 gewährleistet auf einfache Weise eine kontrollierte Erwärmung des Kunststoffmaterials. Durch die mittels des Temperatur-Messsensors gemessene Temperatur des Kunststoffmaterials kann die Leistung der induktiven Heizvorrichtung in Abhängigkeit der gemessenen Temperatur eingestellt werden. Die Steuervorrichtung vergleicht beispielsweise die gemessene Temperatur mit einer gewünschten Soll-Temperatur, die zum Aufschmelzen des Kunststoffmaterials erforderlich ist, und verändert bei Bedarf die Leistung der induktiven Heizvorrichtung. Die Steuervorrichtung stellt insbesondere eine Frequenz f und/oder eine Amplitude einer Wechselspannung und/oder eines Wechselstroms ein, mit der die induktive Heizvorrichtung betrieben wird. Beispielsweise weist die induktive Heizvorrichtung eine Energieversorgungseinrichtung mit einem Frequenzumrichter auf.

Der Erfindung liegt ferner die Aufgabe zugrunde, ein Verfahren zu schaffen, das auf einfache und effiziente Weise eine Erwärmung bzw. Aufheizung von aufzubereitendem Kunststoffmaterial mit einem hohen Energieeintrag ermöglicht. Das Verfahren soll insbesondere eine Erwärmung bzw. Aufheizung des Kunststoffmaterials bis zu dessen Aufschmelzung ermöglichen.

Diese Aufgabe wird durch ein Verfahren mit den Merkmalen des Anspruchs 10 gelöst. Die Vorteile des erfindungsgemäßen Verfahrens entsprechen den bereits beschriebenen Vorteilen der erfindungsgemäßen Schneckenmaschine.

Weitere Merkmale, Vorteile und Einzelheiten der Erfindung ergeben sich aus der nachfolgenden Beschreibung eines Ausführungsbeispiels. Es zeigen:

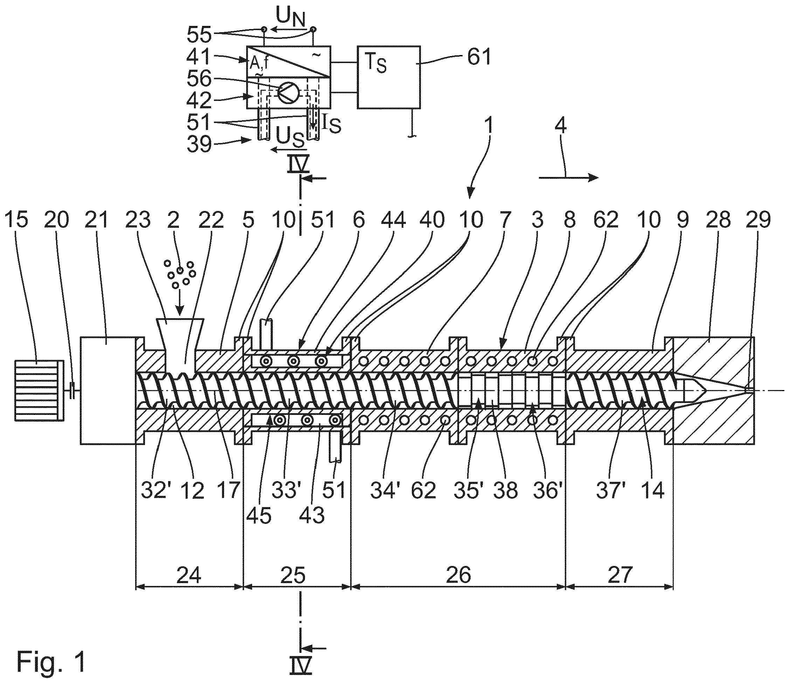

- Fig. 1: eine teilweise geschnitten dargestellte Mehrwellen-Schneckenmaschine zur Aufbereitung von Kunststoffmaterial,
- Fig. 2: eine vergrößerte Darstellung der Mehrwellen-Schneckenmaschine in Fig. 1 im Bereich einer induktiven Heizvorrichtung,

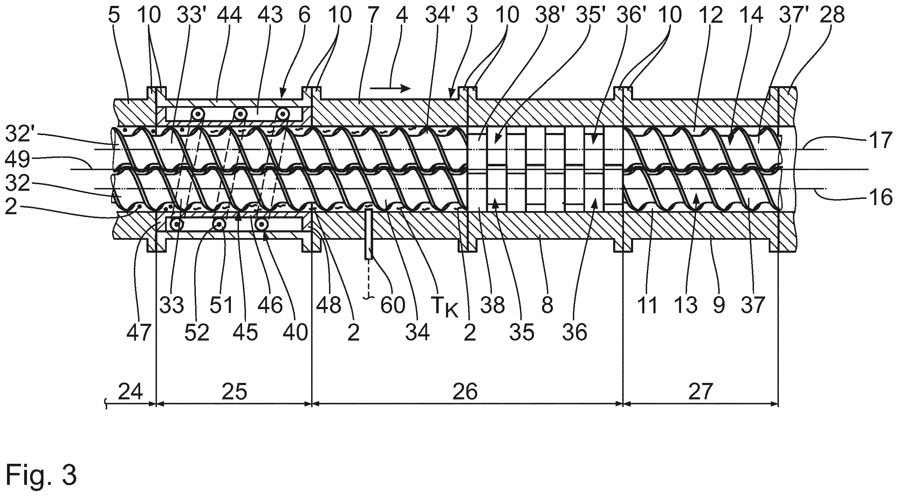

- Fig. 3: eine ausschnittsweise geschnittene Draufsicht auf die Mehrwellen-Schneckenmaschine in Fig. 1, und

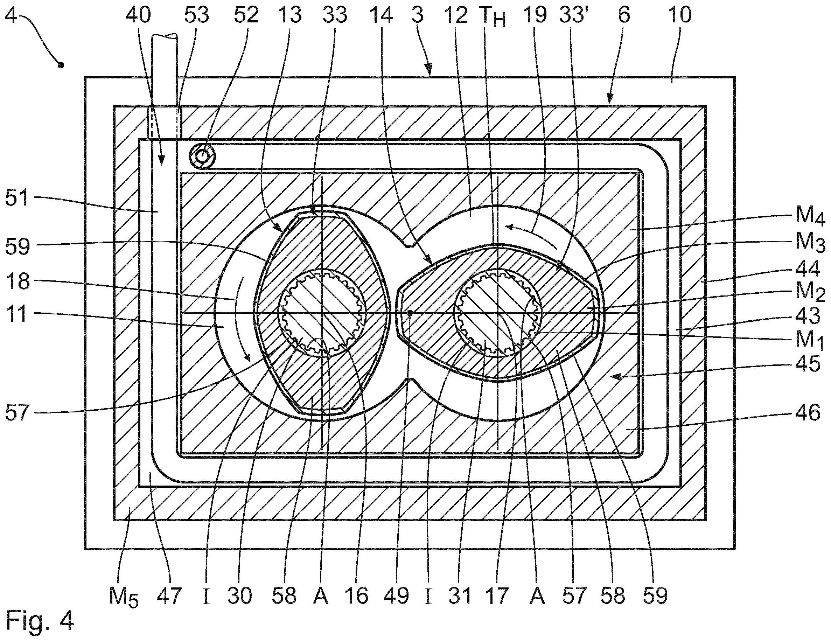

- Fig. 4: einen Querschnitt durch die Mehrwellen-Schneckenmaschine entlang der Schnittlinie IV-IV in Fig. 1.

Eine Mehrwellen-Schneckenmaschine 1 dient zur Aufbereitung eines Kunststoffmaterials 2. Die Schneckenmaschine 1 weist ein Gehäuse 3 aus mehreren in einer Förderrichtung 4 des Kunststoffmaterials 2 nacheinander angeordneten und als Gehäuseschüsse bezeichneten Gehäuseabschnitten 5 bis 9 auf. Die Gehäuseabschnitte 5 bis 9 sind über endseitig angeordnete Flansche 10 miteinander verbunden und bilden so das Gehäuse 3 aus.

In dem Gehäuse 3 sind zwei zueinander parallele und einander durchdringende Gehäusebohrungen 11, 12 ausgebildet, die im Querschnitt die Form einer liegenden Acht haben. In den Gehäusebohrungen 11, 12 sind konzentrisch zwei Behandlungselementwellen 13, 14 angeordnet, die von einem Antriebsmotor 15 um zugehörige Drehachsen 16, 17 drehantreibbar sind. Die Behandlungselementwellen 13, 14 werden gleichsinnig, also in gleichen Drehrichtungen 18, 19 um die Drehachsen 16, 17 angetrieben. Zwischen dem Antriebsmotor 15 und den Behandlungselementwellen 13, 14 ist eine Kupplung 20 und ein Verzweigungsgetriebe 21 angeordnet.

Auf dem dem Verzweigungsgetriebe 21 benachbarten ersten Gehäuseabschnitt 5 ist eine Zuführöffnung 22 ausgebildet, durch die das aufzubereitende Kunststoffmaterial 2 in die Gehäusebohrungen 11, 12 einführbar ist. Zur Zuführung des Kunststoffmaterials 2 durch die Zuführöffnung 22 ist eine Materialzuführung 23 in Form eines Trichters auf dem ersten Gehäuseabschnitt 5 angeordnet.

Die Schneckenmaschine 1 weist in der Förderrichtung 4 nacheinander eine Einzugszone 24, eine Heizzone 25, eine Homogenisierungszone 26 und eine Druckaufbauzone 27 auf. Das Gehäuse 3 ist an dem letzten Gehäuseabschnitt 9 durch eine Düsenplatte 28 abgeschlossen, die eine Austragsöffnung 29 aufweist.

Die Behandlungselementwellen 13, 14 sind durch Wellen 30, 31 und darauf angeordnete Behandlungselementen 32 bis 37 bzw. 32' bis 37' gebildet. Die auf der ersten Welle 30 angeordneten Behandlungselemente 32 bis 37 und die auf der zweiten Welle 31 angeordneten Behandlungselemente 32' bis 37' entsprechen einander, wobei die Bezugszeichen der auf der zweiten Welle 31 angeordneten Behandlungselemente 32' bis 37' zur Unterscheidung ein ' aufweisen.

Die Behandlungselemente 32 bis 37 und 32' bis 37' sind paarweise dichtkämmend ausgebildet, greifen also ineinander. Die Behandlungselemente sind in der Einzugszone 24 und in der Heizzone 25 als Schneckenelemente 32, 32' und 33, 33' ausgebildet. In der nachgeordneten Homogenisierungszone 26 sind die Behandlungselemente als Schneckenelemente 34, 34' und Knetelemente 35, 36 und 35', 36' ausgebildet. Jedes der Knetelemente 35, 36 und 35', 36' ist als Knetblock, also einstückig ausgebildet. Die Knetelemente 35, 36 und 35', 36' weisen jeweils mehrere Knetscheiben 38, 38' auf, die winkelversetzt zueinander angeordnet und miteinander verbunden sind. In der Druckaufbauzone 27 sind die Behandlungselemente wiederum als Schneckenelemente 37, 37' ausgebildet.

Die Behandlungselemente 32 bis 37 und 32' bis 37' sind drehfest auf den zugehörigen Wellen 30, 31 angeordnet. Hierzu weisen die Wellen 30, 31 ein Außenprofil A auf, das in ein entsprechendes Innenprofil I der Behandlungselemente 32 bis 37 und 32' bis 37' eingreift.

Zum Erwärmen des Kunststoffmaterials 2 in der Heizzone 25 weist die Schneckenmaschine 1 eine induktive Heizvorrichtung 39 auf. Die induktive Heizvorrichtung 39 umfasst eine Spule 40, eine zugehörige Energieversorgungseinrichtung 41 und eine Kühleinrichtung 42.

Die Spule 40 ist in einem Aufnahmeraum 43 angeordnet, der in dem Gehäuseabschnitt 6 ausgebildet ist. Der Gehäuseabschnitt 6 weist einen Außenmantel 44 auf, in dem eine Innenhülse 45 angeordnet ist. Der Außenmantel 44 und die Innenhülse 45 begrenzen den Aufnahmeraum 43. An dem Außenmantel 44 sind endseitig des Gehäuseabschnitts 6 die Flansche 10 ausgebildet. Demgegenüber sind in einem in der Förderrichtung 4 verlaufenden ersten Innenhülsenabschnitt 46 die Gehäusebohrungen 11, 12 ausgebildet. An dem ersten Innenhülsenabschnitt 46 sind endseitig zweite Innenhülsenabschnitte 47, 48 ausgebildet, die quer zu den Drehachsen 16, 17 verlaufen und den Aufnahmeraum 43 endseitig verschließen. Vorzugsweise ist die Innenhülse 45 mittels der zweiten Innenhülsenabschnitte 47, 48 in dem Außenmantel 44 befestigt, beispielsweise durch eine Presspassung.

Die Spule 40 weist eine Mittellängsachse 49 auf und begrenzt einen Innenraum 50. Die Mittellängsachse 49 verläuft im Wesentlichen parallel zu den Drehachsen 16, 17, so dass die Behandlungselementwellen 13, 14 durch den Innenraum 50 der Spule 40 verlaufen. Die Spule 40 umgibt somit die Behandlungselementwellen 13, 14 in der Heizzone 25.

Die Spule 40 umfasst in üblicher Weise einen Leiter 51, der zu der Spule 40 gewickelt ist und mehrere Wicklungen bzw. Windungen aufweist. Der Leiter 51 weist ein elektrisch gut leitfähiges Material auf, wie beispielsweise Aluminium oder Kupfer. In dem Leiter 51 ist ein Kühlmittelkanal 52 ausgebildet, der Teil der Kühleinrichtung 42 ist. Der Leiter 51 wird endseitig der Spule 40 durch Durchgangsöffnungen 53, 54, die in dem Außenmantel 44 ausgebildet sind, aus dem Aufnahmeraum 43 geführt. Der Kühlkanal 52 ist außerhalb des Gehäuseabschnitts 6 mit einer Kühlmittelpumpe 56 verbunden, mittels der ein Kühlmittel durch den Kühlkanal 52 förderbar ist. Die Kühlmittelpumpe 56 ist Teil der Kühleinrichtung 42. Als Kühlmittel wird vorzugsweise Wasser eingesetzt.

Die Spule 40 ist an die Energieversorgungseinrichtung 41 angeschlossen, die die Spule 40 mit einer Wechselspannung U_{S} und/oder einem Wechselstrom I_{S} mit einer einstellbaren Frequenz f und/oder einer einstellbaren Amplitude A versorgt. Die Energieversorgungseinrichtung 41 ist insbesondere ein Frequenzumrichter. Die Energieversorgungseinrichtung 41 ist mit Anschlussklemmen 55 an ein Energieversorgungsnetz angeschlossen, das eine Netzspannung U_{N} bereitstellt.

Das Erwärmen des Kunststoffmaterials 2 erfolgt über die Behandlungselemente 33 und 33'. Zur einfachen und effizienten Erwärmung sind die Behandlungselemente 33, 33' dreischichtig ausgebildet. Eine innere Drehmomentübertragungs-Schicht 57 ist von einer Isolations-Schicht 58 umgeben, die wiederum von einer äußeren Heiz-Schicht 59 umgeben ist. Die Isolations-Schicht 58 des jeweiligen Behandlungselements 33, 33' isoliert die zugehörige Heiz-Schicht 59 thermisch von der zugehörigen Drehmomentübertragungs-Schicht 57 und der zugehörigen Welle 30 bzw. 31. Hierzu ist die jeweilige Isolations-Schicht 58 über den gesamten Umfang und die gesamte Länge der Drehmomentübertragungs-Schicht 57 ausgebildet. Die jeweilige Isolations-Schicht 58 umgibt somit die zugehörige Drehachse 16 bzw. 17. Die jeweilige Heiz-Schicht 59 bildet eine Oberfläche des Behandlungselements 33 bzw. 33' aus.

Zur Ausbildung der Schichten 57 bis 59 sind die Behandlungselemente 33, 33' aus einem Metall-Keramik-Verbundmaterial hergestellt. Die jeweilige Drehmomentübertragungs-Schicht 57 ist aus einem ersten Metall M₁ und die jeweilige Heiz-Schicht 59 aus einem zweiten metallischen Material M₃ hergestellt, wohingegen die jeweils dazwischen liegende Isolations-Schicht 58 aus einem keramischen Material M₂ hergestellt ist. Das Material M₁ ist beispielsweise ein Stahl, da dieser eine geeignete mechanische Belastbarkeit aufweist. Demgegenüber ist das Material M₂ thermisch und elektrisch nicht leitfähig und elektromagnetisch transparent. Das Material M₃ ist eisenhaltig, also beispielsweise ein Stahl, so dass mittels der induktiven Heizvorrichtung 39 induzierte Wirbelströme zu Wirbelstromverlusten führen und die Heiz-Schichten 59 auf eine gewünschte Heiz-Temperatur T_{H} erwärmt werden können. In dem eisenhaltigen Material M₃ entstehen zudem Ummagnetisierungsverluste infolge des magnetischen Wechselfeldes der induktiven Heizvorrichtung 39, so dass auch die Ummagnetisierungsverluste die Heiz-Schichten 59 erwärmen.

Die Innenhülse 45 ist aus einem elektromagnetisch transparenten Material M₄. Hierdurch wird eine Erwärmung der Innenhülse 45 infolge des magnetischen Wechselfeldes der induktiven Heizvorrichtung 39 vermieden. Das Material M₄ ist vorzugsweise ein oxidkeramisches Faserverbundmaterial. Ein oxidkeramischer Faserverbundwerkstoff verbindet Eigenschaften von einem Metall und einer Keramik, wie beispielsweise elektromagnetische Transparenz, elektrische und thermische Isolationsfähigkeit, duktiles und nicht-sprödes Bruchverhalten, hohe Zug- und Biegefestigkeit, Thermowechselbeständigkeit und Hochtemperaturstabilität bis über 1300° C.

Da der Außenmantel 44 außerhalb der Spule 40 angeordnet ist, werden durch das magnetische Wechselfeld in dem Außenmantel 44 nur geringe Wirbelströme induziert. Dementsprechend ist der Außenmantel 44 aus einem metallischen Material M₅ hergestellt. Vorzugsweise sind auch die weiteren Gehäuseabschnitte 5 und 7 bis 9 aus dem metallischen Material M₅ hergestellt. Das metallische Material M₅ ist insbesondere ein Stahl. Alternativ kann der Außenmantel 44 jedoch auch aus dem Material M₄ hergestellt sein. Hierdurch wird eine Erwärmung des Außenmantels 44 im Wesentlichen vollständig vermieden.

Zur Messung einer Temperatur T_{K} des Kunststoffmaterials 2 weist die Schneckenmaschine 1 einen Temperatur-Messsensor 60 auf. Der Temperatur-Messsensor 60 ist beispielsweise an dem Gehäuseabschnitt 7 zu Beginn der Homogenisierungszone 26 angeordnet. Der Temperatur-Messsensor 60 ist in Signalverbindung mit einer Steuervorrichtung 61, die zur Steuerung der Schneckenmaschine 1 und insbesondere der induktiven Heizvorrichtung 39 dient. Hierzu steht die Steuervorrichtung 61 insbesondere in Signalverbindung mit der Energieversorgungseinrichtung 41 und der Kühleinrichtung 42. Die Steuervorrichtung 61 dient insbesondere zur Steuerung der induktiven Heizvorrichtung 39 in Abhängigkeit der gemessenen Temperatur T_{K}.

Die Schneckenmaschine 1 weist weiterhin eine Kühlvorrichtung auf, die in den Gehäuseabschnitten 7 und 8 ausgebildete Kühlkanäle 62 umfasst. Durch die Kühlkanäle 62 ist in üblicher Weise mittels einer nicht näher dargestellten Kühlmittelpumpe ein Kühlmittel förderbar. Das Kühlmittel ist insbesondere Wasser. Bei Bedarf können auch in dem Außenmantel 44 des Gehäuseabschnitts 6 Kühlkanäle 62 ausgebildet sein.

Die Funktionsweise der Schneckenmaschine 1 ist wie folgt:
Durch die Zuführöffnung 22 wird der Schneckenmaschine 1 pulverförmiges und/oder granulatförmiges Kunststoffmaterial 2 in die Einzugszone 24 zugeführt. In der Einzugszone 24 wird das Kunststoffmaterial 2 in Förderrichtung 4 bis zu der Heizzone 25 gefördert.

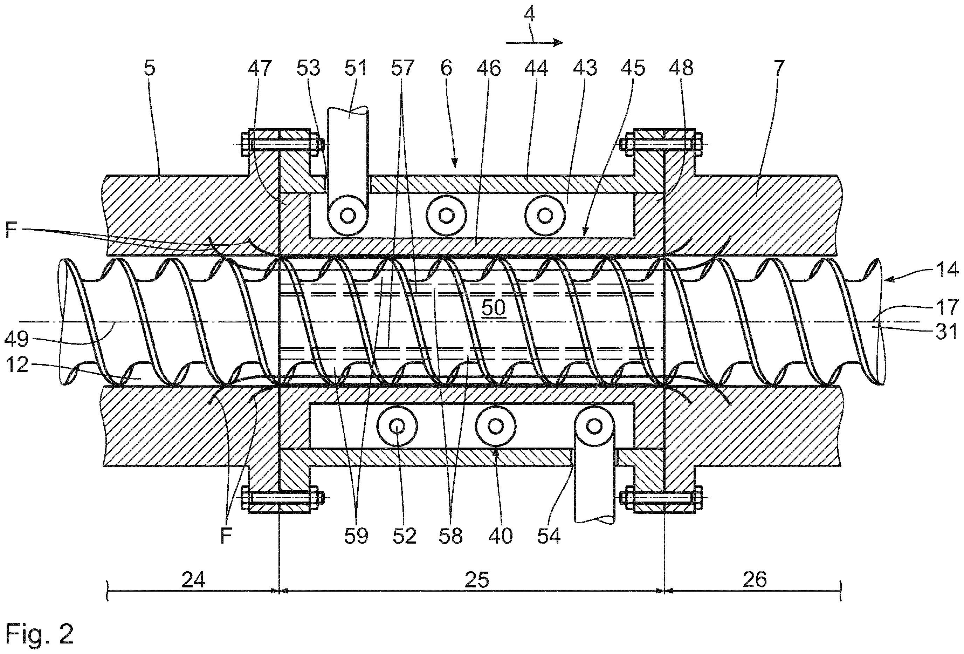

In der Heizzone 25 wird das Kunststoffmaterial 2 mittels der induktiven Heizvorrichtung 39 erwärmt bzw. aufgeheizt. Hierzu erzeugt die induktive Heizvorrichtung 39 mittels der Energieversorgungseinrichtung 41 und der Spule 40 ein elektromagnetisches Wechselfeld. Die induktive Heizvorrichtung 39 wird insbesondere mit einer Frequenz f betrieben, wobei für die Frequenz f in einem ersten Frequenzbereich gilt: 1 kHz ≤ f ≤ 50 kHz, insbesondere 5 kHz ≤ f ≤ 45 kHz, und insbesondere 10 kHz ≤ f ≤ 40 kHz. Weiterhin gilt für die Frequenz f in einem zweiten Frequenzbereich: 140 kHz ≤ f ≤ 360 kHz, insbesondere 150 kHz ≤ f ≤ 350 kHz, und insbesondere 160 kHz ≤ f ≤ 340 kHz. Vorzugsweise wird die induktive Heizvorrichtung 39 abwechselnd in beiden Frequenzbereichen betrieben, sodass unterschiedliche Eindringtiefen des magnetischen Wechselfeldes erzielt werden. In Figur 2 sind Feldlinien F des magnetischen Wechselfeldes veranschaulicht. Die Konzentration der Feldlinien F ist im Innenraum 50 der Spule 40 hoch, so dass dort die magnetische Feldstärke hoch ist. Die Heiz-Schichten 59 der Behandlungselemente 33, 33' wirken zudem als eine Art Kern. Durch das magnetische Wechselfeld werden in den Heiz-Schichten 59 Wirbelströme induziert, die ohmsche Wirbelstromverluste verursachen. Zudem werden durch das magnetische Wechselfeld Ummagnetisierungsverluste in den Heiz-Schichten 59 verursacht. Die ohmschen Wirbelstromverluste und die Ummagnetisierungsverluste führen zu einer Erwärmung der Heiz-Schichten 59 auf die Heiztemperatur T_{H}. Die Heiztemperatur T_{H} kann über die Frequenz f und/oder über die Amplitude A verändert werden. Da das Kunststoffmaterial 2 in intensiven Kontakt mit den Behandlungselementen 33, 33' steht, wird dieses an den Heiz-Schichten 59 erwärmt. Die in den Heiz-Schichten 59 erzeugte Wärme wird also auf das Kunststoffmaterial 2 übertragen, so dass dieses innerhalb der Heizzone 25 bis auf die Temperatur T_{K} aufgeheizt wird. Die Temperatur T_{K} liegt insbesondere oberhalb einer Schmelztemperatur des Kunststoffmaterials 2, so dass das feste Kunststoffmaterial 2 innerhalb der Heizzone 25 zumindest teilweise aufgeschmolzen wird.

Da die Innenhülse 45 aus dem elektromagnetisch transparenten Material M₄ ausgebildet ist, das nicht-magnetisch und elektrisch nicht-leitfähig ist, erwärmt sich die Innenhülse 45 aufgrund des magnetischen Wechselfeldes nicht. Die von der induktiven Heizvorrichtung 39 bereitgestellte Energie wird somit einfach und effizient über die Heiz-Schichten 59 der Behandlungselemente 33, 33' in das Kunststoffmaterial 2 eingebracht. Durch die Isolations-Schichten 58 wird zudem vermieden, dass die in den Heiz-Schichten 59 erzeugte Wärme in Richtung der Wellen 30, 31 übertragen wird.

Die Temperatur T_{K} des Kunststoffmaterials 2 wird mittels des Temperatur-Messsensors 60 gemessen und der Steuervorrichtung 61 zugeführt. Die Steuervorrichtung 61 vergleicht die Temperatur T_{K} mit einer vordefinierten Soll-Temperatur T_{S}, die vorzugsweise oberhalb der Schmelztemperatur des Kunststoffmaterials 2 liegt. Liegt die Temperatur T_{K} unterhalb der Soll-Temperatur T_{S}, steuert die Steuervorrichtung 61 die Energieversorgungseinrichtung 41 an und erhöht die Amplitude A und/oder die Frequenz f. Umgekehrt wird die Amplitude A und/oder die Frequenz f erniedrigt, wenn die Temperatur T_{K} zu hoch ist. Da durch den Leiter 51 der Spule 40 ein hoher Strom I_{S} fließt, muss der Leiter 51 bei Bedarf gekühlt werden. Hierzu pumpt die Kühleinrichtung 42 mittels der Kühlmittelpumpe 56 ein Kühlmittel, insbesondere Wasser durch den Kühlkanal 52.

In der Homogenisierungszone 26 wird das Kunststoffmaterial 2 homogenisiert und - sofern noch festes Kunststoffmaterial 2 vorliegt - vollständig aufgeschmolzen. Bei Bedarf wird das Kunststoffmaterial 2 gekühlt, indem ein Kühlmittel, insbesondere Wasser, durch die Kühlkanäle 62 gepumpt wird.

In der Druckaufbauzone 27 wird der Druck des vollständig aufgeschmolzenen und homogenisierten Kunststoffmaterials 2 erhöht. Das Kunststoffmaterial 2 wird anschließend durch die Austragsöffnung 29 ausgetragen.

Durch die erfindungsgemäße Schneckenmaschine 1 wird in einfacher und effizienter Weise induktiv bzw. thermisch Energie in das Kunststoffmaterial 2 eingetragen. Ein mechanischer Energieeintrag kann somit erheblich reduziert werden, wodurch sich die mechanische Belastung und der Verschleiß der Schneckenmaschine 1 erheblich reduziert. Durch den effizienten Energieeintrag ist zudem ein energiesparender Betrieb der Schneckenmaschine 1 möglich. Die induktive Heizvorrichtung 39 weist bezogen auf eine Gesamtleistung der Schneckenmaschine 1 insbesondere eine HeizLeistung von 10 % bis 90 %, insbesondere von 20 % bis 80 %, und insbesondere von 30 % bis 70 % auf. Bei Bedarf kann die induktive Heizvorrichtung 39 auch gleichzeitig mit mehreren unterschiedlichen Frequenzen betrieben werden. Hierdurch können unterschiedlich entfernte Bereiche der Behandlungselemente 33, 33' erwärmt werden, wie beispielsweise die umlaufenden Heiz-Schichten 59.

Das Verbundmaterial der Behandlungselemente 33, 33' wird beispielsweise durch Sintern oder Flammspritzen hergestellt. Verfahren zur Herstellung derartiger Verbundmaterialien bzw. Verbundkörper sind bekannt.

## Patentansprüche

1. Schneckenmaschine zur Aufbereitung von Kunststoffmaterial und zu dessen Erwärmung bis zu dessen Aufschmelzung, mit
- einem Gehäuse (3), das mehrere in einer Förderrichtung (4) eines aufzubereitenden Kunststoffmaterials (2) nacheinander angeordnete und miteinander verbundene Gehäuseabschnitte (5 bis 9) aufweist,
- mindestens einer in dem Gehäuse (3) ausgebildeten Gehäusebohrung (11, 12),
- einer in die mindestens eine Gehäusebohrung (11, 12) mündenden Zuführöffnung (22) zur Zuführung des Kunststoffmaterials (2),
- mindestens einer Behandlungselementwelle (13, 14),
-- die in der zugehörigen Gehäusebohrung (11, 12) angeordnet und um eine zugehörige Drehachse (16, 17) drehantreibbar ist, und
-- die zur Behandlung des Kunststoffmaterials (2) mehrere Behandlungselemente (32 bis 37, 32' bis 37') aufweist, die in der Förderrichtung (4) nacheinander auf mindestens einer zugehörigen Welle (30, 31) drehfest angeordnet sind, wobei in einer Heizzone (25) mindestens ein Behandlungselement (33, 33') zumindest teilweise aus einem elektrisch leitfähigen Material (M₃) ausgebildet ist,
**gekennzeichnet durch**
eine induktive Heizvorrichtung (39) zum Erwärmen des Kunststoffmaterials (2) in der Heizzone (25), wobei
- mindestens eine Spule (40) der induktiven Heizvorrichtung (39) die mindestens eine Behandlungselementwelle (13, 14) umgibt und die mindestens eine Behandlungselementwelle (13, 14) in einem Innenraum (50) der mindestens einen Spule (40) angeordnet ist,
- in der Heizzone (25) mindestens ein Gehäuseabschnitt (6) derart zumindest teilweise aus einem elektromagnetisch transparenten Material (M₄) ausgebildet ist, dass eine in dem Innenraum (50) angeordnete Innenhülse (45) ausschließlich aus dem elektromagnetisch transparenten Material (M₄) hergestellt ist, wobei das elektromagnetisch transparente Material (M₄) nicht-magnetisch und elektrisch nicht-leitfähig ist, und
- die mindestens eine Spule (40) **durch** eine Kühleinrichtung (42) kühlbar ist, wobei
-- die mindestens eine Spule (40) einen Kühlkanal ausbildet
oder
-- die Innenhülse einen Aufnahmeraum (43), in dem die mindestens eine Spule (40) angeordnet ist, vollständig begrenzt und der Aufnahmeraum (43) als Kühlkanal dient.

2. Schneckenmaschine nach Anspruch 1, **dadurch gekennzeichnet, dass** der mindestens eine Gehäuseabschnitt (6) einen Außenmantel (44) und die Innenhülse (45) aufweist,
dass die Innenhülse (45) zumindest teilweise einen Aufnahmeraum (43) begrenzt, und
dass in dem Aufnahmeraum (43) die mindestens eine Spule (40) der induktiven Heizvorrichtung (39) angeordnet ist.

3. Schneckenmaschine nach Anspruch 1 oder 2, **dadurch gekennzeichnet,**
**dass** der mindestens eine Gehäuseabschnitt (6) einen Außenmantel (44) und die Innenhülse (45) aufweist,
**dass** die Innenhülse (45) insbesondere aus einem keramischen und/oder faserverstärkten Material ist.

4. Schneckenmaschine nach einem der Ansprüche 1 bis 3, **dadurch gekennzeichnet,**
**dass** das mindestens eine Behandlungselement (33, 33') eine metallische Heiz-Schicht (59) aufweist, die zum Erwärmen des Kunststoffmaterials (2) eine Oberfläche des mindestens einen Behandlungselements (33, 33') bildet,
**dass** das mindestens eine Behandlungselement (33, 33') eine Isolations-Schicht (58) aufweist, die die Heiz-Schicht (59) von der Welle (30, 31) thermisch isoliert.

5. Schneckenmaschine nach einem der Ansprüche 1 bis 4, **dadurch gekennzeichnet,**
**dass** das mindestens eine Behandlungselement (33, 33') aus einem Verbundmaterial hergestellt ist,
**dass** eine innere Drehmomentübertragungs-Schicht (57) und eine äußere Heiz-Schicht (59) des Verbundmaterials jeweils aus einem metallischen Material (M₁, M₃) hergestellt ist, und
**dass** eine dazwischen liegende Isolations-Schicht (58) aus einem nicht-leitfähigen und/oder elektromagnetisch transparenten Material (M₂) hergestellt ist.

6. Schneckenmaschine nach Anspruch 4 oder 5, **dadurch gekennzeichnet,**
**dass** die Isolations-Schicht (58) die zugehörige Drehachse (16, 17) der Behandlungselementwelle (13, 14) umgibt.

7. Schneckenmaschine nach einem der Ansprüche 1 bis 6, **dadurch gekennzeichnet,**
**dass** die Kühleinrichtung (42) eine Wasser-Kühleinrichtung ist.

8. Schneckenmaschine nach einem der Ansprüche 1 bis 7, **dadurch gekennzeichnet,**
**dass** die induktive Heizvorrichtung (39) die mindestens eine Spule (40) und eine zugehörige Energieversorgungseinrichtung (41) aufweist, dass die Energieversorgungseinrichtung (41) eine Wechselspannung (Us) und/oder einen Wechselstrom (Is) bereitstellt, insbesondere mit einer einstellbaren Frequenz (f) und/oder einer einstellbaren Amplitude (A).

9. Schneckenmaschine nach einem der Ansprüche 1 bis 8, **gekennzeichnet**
**durch** einen Temperatur-Messsensor (60) zur Messung einer Temperatur (T_{K}) des Kunststoffmaterials (2), und
**durch** eine Steuervorrichtung (61) zur Steuerung der induktiven Heizvorrichtung (39) in Abhängigkeit der gemessenen Temperatur (T_{K}) des Kunststoffmaterials (2).

10. Verfahren zur Aufbereitung von Kunststoffmaterial und zu dessen Erwärmung bis zu dessen Aufschmelzung, umfassend folgende Schritte:
- Bereitstellen einer Schneckenmaschine (1) nach mindestens einem der Ansprüche 1 bis 9,
- Zuführen eines Kunststoffmaterials (2) in die mindestens eine Gehäusebohrung (11, 12),
- Erwärmen des mindestens einen Behandlungselements (33, 33') mittels der induktiven Heizvorrichtung (39),
- Erwärmen des Kunststoffmaterials (2) an dem mindestens einen erwärmten Behandlungselement (33, 33'), insbesondere bis zum zumindest teilweisen Aufschmelzen des Kunststoffmaterials (2) in der Heizzone (25),
- Kühlen der Spule (40) durch ein Kühlmittel, das von der Kühleinrichtung (42) mittels einer Kühlmittelpumpe (56) durch den Kühlkanal (52) gepumpt wird.

## Claims

1. Screw machine for processing plastic material and for the heating thereof until it has fused, with
- a housing (3), comprising several housing sections (5 to 9) in a conveying direction (4) of a plastic material (2) to be processed arranged one after the other and connected with each other,
- at least one housing bore (11, 12) formed in the housing (3),
- a supply opening (22) opening into the at least one housing bore (11, 12) for supplying the plastic material (2),
- at least one treatment element shaft (13, 14),
-- arranged in the associated housing bore (11, 12) and rotatably drivable about an associated axis of rotation (16, 17), and
-- comprising several treatment elements (32 to 37, 32' to 37') for treating the plastic material (2), arranged in a torque-proof way on at least one associated shaft (30, 31) one after the other in the conveying direction (4), wherein at least one treatment element (33, 33') is formed from an electrically conductive material (M₃) at least in part in a heating zone (25)
**characterised by**
an inductive heating device (39) for heating the plastic material (2) in the heating zone (25),wherein
- at least one coil (40) of the inductive heating device (39) surrounds the at least one treatment element shaft (13, 14) and the at least one treatment elements shaft (13, 14) is arranged in an interior (50) of the at least one coil (40),
- at least one housing section (6) is made from an electromagnetic transparent material (M₄) at least in part in the heating zone (25) such that an inner sleeve (45) arranged in the interior (50) is exclusively made from the electromagnetic transparent material (M₄), wherein the electromagnetic transparent material (M₄) is nonmagnetic and not electrically conductive, and
- the at least one coil (40) is coolable with a cooling means (42), wherein
-- the at least one coil (40) forms a cooling channel
or
-- the inner sleeve (45) entirely delimits a receiving space (43), in which the at least one coil (40) is arranged, and the receiving space (43) serves as a cooling channel.

2. Screw machine according to claim 1, **characterised in**
**that** the at least one housing section (6) comprises an outer sleeve (44) and the inner sleeve (45),
**that** the inner sleeve (45) delimits a receiving space (43) at least in part, and
**that** the at least one coil (40) of the inductive heating device (39) is arranged in the receiving space (43).

3. Screw machine according to claim 1 or 2, **characterised in**
**that** the at least one housing section (6) comprises an outer sleeve (44) and the inner sleeve (45),
**that** the inner sleeve (45) is in particular made from a ceramic and/or fibre-reinforced material.

4. Screw machine according to one of the claims 1 to 3, **characterised in**
**that** the at least one treatment element (33, 33') comprises a metallic heating layer (59) that forms a surface of the at least one treatment element (33, 33') for heating the plastic material (2),
**that** the at least one treatment element (33, 33') comprises a insulation layer (58) that thermally insulates the heating layer (59) from the shaft (30, 31).

5. Screw machine according to one of the claims 1 to 4, **characterised in**
**that** the at least one treatment element (33, 33') is made from a composite material,
**that** an inner torque transmission layer (57) and an outer heating layer (59) of the composite material are each made from a metallic material (M₁, M₃), and
**that** an insulation layer (58) lying between the same is made from a non-conductive and/or electromagnetic transparent material (M₂).

6. Screw machine according to claim 4 or 5, **characterised in**
**that** the insulation layer (58) surrounds the associated axis of rotation (16, 17) of the treatment element shaft (13, 14).

7. Screw machine according to one of the claims 1 to 6, **characterised in**
**that** the cooling means (42) is a water cooling means.

8. Screw machine according to one of the claims 1 to 7, **characterised in**
**that** the inductive heating device (39) comprises at least one coil (40) and an associated energy supply means (41),
**that** the energy supply means (41) provides an alternating voltage (Uₛ) and/or an alternating current (Is), in particular with an adjustable frequency (f) and/or an adjustable amplitude (A).

9. Screw machine according to one of the claims 1 to 8, **characterised by** a temperature measuring sensor (60) for measuring a temperature (T_{K}) of the plastic material (2), and
**by** a controller (61) for controlling the inductive heating device (39) depending on the measured temperature (T_{K}) of the plastic material (2).

10. Method for processing plastic material and for the heating thereof until it has fused, comprising the following steps:
- providing a screw machine (1) according to at least one of the claims 1 to 9,
- supplying a plastic material (2) to the at least one housing bore (11, 12),
- heating the at least one treatment element (33, 33') by means of the inductive heating device (39),
- heating the plastic material (2) on the at least one heated treatment element (33, 33'), in particular until at least part of the plastic materials (2) in the heating zone (25) is fused,
- cooling the coil (40) by means of a coolant that is pumped from the cooling means (42) through the cooling channel (52) by means of a coolant pump (56).

## Revendications

1. Machine à vis sans fin destinée à préparer une matière plastique et à la chauffer jusqu'à ce qu'elle fonde, comprenant
- un logement (3) qui comporte plusieurs parties de logement (5 à 9) reliées les unes aux autres et agencées les unes derrière les autres dans un sens de transport (4) d'une matière plastique (2) à préparer,
- au moins un trou de logement (11, 12) ménagé dans le logement (3),
- une ouverture d'amenée (22) débouchant dans ledit au moins un trou de logement (11, 12) pour amener la matière plastique (2),
- au moins un arbre d'élément de traitement (13, 14),
-- qui est agencé dans le trou de logement (11, 12) associé et qui peut être entraîné en rotation autour d'un axe de rotation (16, 17) associé, et
-- qui, pour le traitement de la matière plastique (2), comprend plusieurs éléments de traitement (32 à 37, 32' à 37') qui sont agencés de manière solidaire en rotation les uns à la suite des autres dans le sens de transport (4) sur au moins un arbre (30, 31) associé, dans lequel au moins un élément de traitement (33, 33'), dans une zone de chauffage (25), est fait au moins en partie d'un matériau électro-conducteur (M₃),
**caractérisé par**
un dispositif de chauffage par induction (39) destiné à chauffer la matière plastique (2) dans la zone de chauffage (25), dans lequel
- au moins une bobine (40) du dispositif de chauffage par induction (39) entoure ledit au moins un arbre d'élément de traitement (13, 14) et ledit au moins un arbre d'élément de traitement (13, 14) est agencé dans un espace intérieur (50) de ladite au moins une bobine (40),
- dans la zone de chauffage (25), au moins une partie de logement (6) est faite au moins en partie d'un matériau transparent au rayonnement électromagnétique (M₄), de sorte qu'un manchon intérieur (45) agencé dans l'espace intérieur (50) est fabriqué exclusivement à partir du matériau transparent au rayonnement électromagnétique (M₄), dans laquelle le matériau transparent au rayonnement électromagnétique (M₄) est amagnétique et électriquement non-conducteur, et
- ladite au moins une bobine (40) peut être refroidie par un dispositif de refroidissement (42), dans lequel
-- ladite au moins une bobine (40) constitue un canal de refroidissement
ou
-- le manchon intérieur délimite entièrement un espace de réception (43), dans lequel ladite au moins une bobine (40) est agencée, et l'espace de réception (43) sert de canal de refroidissement.

2. Machine à vis sans fin selon la revendication 1, **caractérisée**
**en ce que** ladite au moins une partie de logement (6) comprend une enveloppe extérieure (44) et le manchon intérieur (45),
**en ce que** le manchon intérieur (45) délimite au moins en partie un espace de réception (43), et
**en ce que** ladite au moins une bobine (40) du dispositif de chauffage par induction (39) est agencée dans l'espace de réception (43).

3. Machine à vis sans fin selon la revendication 1 ou 2, **caractérisée**
**en ce que** ladite au moins une partie de logement (6) comprend une enveloppe extérieure (44) et le manchon intérieur (45),
**en ce que** le manchon intérieur (45) est fait en particulier d'un matériau céramique et/ou renforcé par des fibres.

4. Machine à vis sans fin selon l'une quelconque des revendications 1 à 3, **caractérisée**
**en ce que** ledit au moins un élément de traitement (33, 33') comprend une couche de chauffage métallique (59), qui, pour chauffer la matière plastique (2), forme une surface dudit au moins un élément de traitement (33, 33'),
**en ce que** ledit au moins un élément de traitement (33, 33') comprend une couche d'isolation (58) qui isole thermiquement la couche de chauffage (59) de l'arbre (30, 31).

5. Machine à vis sans fin selon l'une quelconque des revendications 1 à 4, **caractérisée**
**en ce que** ledit au moins un élément de traitement (33, 33') est fabriqué à partir d'un matériau composite,
**en ce qu'**une couche de transmission de couple (57) et une couche de chauffage extérieure (59) du matériau composite sont fabriquées chacune à partir d'un matériau métallique (M₁, M₃), et
**en ce qu'**une couche d'isolation (58) située entre celles-ci est fabriquée à partir d'un matériau non-conducteur et/ou transparent au rayonnement électromagnétique (M₂).

6. Machine à vis sans fin selon la revendication 4 ou 5, **caractérisé**
**en ce que** la couche d'isolation (58) entoure l'axe de rotation (16, 17) associé de l'arbre d'élément de traitement (13, 14).

7. Machine à vis sans fin selon l'une quelconque des revendications 1 à 6, **caractérisée**
**en ce que** le dispositif de refroidissement (42) est un dispositif de refroidissement par eau.

8. Machine à vis sans fin selon l'une quelconque des revendications 1 à 7, **caractérisée**
**en ce que** le dispositif de chauffage par induction (39) comprend ladite au moins une bobine (40) et un dispositif d'alimentation en énergie (41) associé,
**en ce que** le dispositif d'alimentation en énergie (41) fournit une tension alternative (Uₛ) et/ou un courant alternatif (Iₛ), en particulier à une fréquence (f) réglable et/ou à une amplitude (A) réglable.

9. Machine à vis sans fin selon l'une quelconque des revendications 1 à 8, **caractérisée**
**par** un capteur de mesure de température (60) destiné à mesurer une température (T_{K}) de la matière plastique (2), et
par un dispositif de commande (61) destiné à commander le dispositif de chauffage par induction (39) en fonction de la température (T_{K}) mesurée de la matière plastique (2).

10. Procédé de fourniture d'une matière plastique et de chauffage de celle-ci jusqu'à ce qu'elle fonde, comprenant les étapes suivantes :
- la fourniture d'une machine à vis sans fin (1) selon au moins l'une des revendications 1 à 9,
- l'amenée d'une matière plastique (2) dans ledit au moins un trou de logement (11, 12),
- le chauffage dudit au moins un élément de traitement (33, 33') au moyen du dispositif de chauffage par induction (39),
- le chauffage de la matière plastique (2) sur ledit au moins un élément de traitement chauffé (33, 33'), en particulier jusqu'à la fusion au moins partielle de la matière plastique (2) dans la zone de chauffage (25),
- le refroidissement de la bobine (40) au moyen d'un réfrigérant, qui est pompé par le dispositif de refroidissement (42), en traversant le canal de refroidissement (52), au moyen d'une pompe à réfrigérant (56).
